# FASCICULE DE BREVET EUROPEEN

(11) **EP 1 697 173 B1**
(45) Date de publication et mention de la délivrance du brevet: **13.02.2008**
(21) Numéro de dépôt: 04816534.4
(22) Date de dépôt: 13.12.2004
(51) Int. Cl.: B60R 13/02, B60R 13/07

(54) **VEHICULE AUTOMOBILE A OUVERTURE ANTI-GOUTTE**
KRAFTFAHRZEUG MIT TROPFSCHUTZÖFFNUNG
MOTOR VEHICLE WITH AN ANTI-DROP OPENING

(30) Priorité: 15.12.2003 FR 0314680
(43) Date de publication de la demande: 06.09.2006
(73) Titulaire: RENAULT S.A.S., 92100 Boulogne Billancourt (FR)
(72) Inventeur: GRET, GILLES, F-28320 Gallardon (FR); HEWAK, GREGOR, F-95490 Vaureal (FR)
(86) Numéro de dépôt international: PCT/FR2004/050680
(87) Numéro de publication internationale: WO 2005/058650

(56) Documents cités:
- EP-A- 1 092 594
- DE-A- 4 409 326
- FR-A- 2 391 102
- US-A- 4 433 867
- PATENT ABSTRACTS OF JAPAN vol. 0102, no. 49 (M-511), 27 août 1986 (1986-08-27) & JP 61 077521 A (KINUGAWA RUBBER IND CO LTD), 21 avril 1986 (1986-04-21)
- PATENT ABSTRACTS OF JAPAN vol. 0081, no. 82 (M-319), 22 août 1984 (1984-08-22) & JP 59 073342 A (NISSAN JIDOSHA KK), 25 avril 1984 (1984-04-25)

## Description

La présente invention se rapporte à un véhicule automobile dont les ouvertures qui sont refermées par des portes, présentent un système d'évacuation d'eau.

Les véhicules automobiles sont recouverts d'une carrosserie dans laquelle sont ménagées les ouvertures et qui présente une paroi interne et une surface externe. Les ouvertures définissent un bord interne qui rejoint ladite paroi interne et un bord externe qui rejoint ladite surface externe et elles présentent une feuillure de porte entre les deux bords. En outre la paroi interne est recouverte d'un habillage intérieur qui joint ledit bord intérieur.

Les portes des véhicules sont généralement incurvées vers l'intérieur, dans leur partie supérieure où s'étend la vitre en position relevée, et ce pour des raisons aérodynamiques, alors que leur partie inférieure est sensiblement verticale. Ainsi, ledit bord externe, dans la partie du véhicule où il longe une bordure de toit est situé à l'aplomb d'une zone interne située, en fonction des véhicules, entre le siège et la partie inférieure de porte.

Un tel agencement présente un inconvénient en cas de pluie car, dès lors que l'on ouvre la porte, l'eau qui s'écoule sur la surface externe de la carrosserie et en bordure de toit, tombe directement dans le véhicule ou sur la personne qui ouvre la porte.

Afin de pallier cet inconvénient, il a été imaginé de rapporter des moyens formant gouttière le long du bord externe de l'ouverture, adaptés à récupérer l'eau qui s'écoule en bordure de toit et à la canaliser pour éviter qu'elle ne s'écoule à l'intérieur du véhicule lorsque l'on ouvre la porte. On pourra se référer notamment au document EP 1 092 594 qui décrit un tel système permettant de résoudre ce problème.

Toutefois, il nécessite de prévoir des moyens adaptés pour recevoir et canaliser l'eau de façon relativement étanche et surtout de prévoir des éléments de fixation appropriés, ce qui représentent un coût supplémentaire.

Un objet de l'invention est alors de fournir un véhicule automobile dont les ouvertures présentent un système d'évacuation d'eau moins coûteux.

Dans ce but, l'invention propose un véhicule automobile comportant une carrosserie qui présente une paroi interne, une surface externe et au moins une ouverture susceptible d'être fermée par une porte, ladite ouverture définissant un bord interne qui rejoint ladite paroi interne et un bord externe qui rejoint ladite surface externe, ladite paroi interne étant recouverte d'un habillage intérieur qui joint ledit bord interne, comme le décrit le document japonais JP-A-61077521, dont ledit habillage intérieur est prolongé par un rebord libre qui s'étend à partir dudit bord interne, vers l'extérieur en regard dudit bord externe.

Ainsi, une caractéristique de l'invention réside dans le mode de mise en oeuvre de l'habillage intérieur qui jusqu'à présent se terminait en joignant le bord interne de l'ouverture et qui désormais présente un rebord libre, lequel rebord libre s'étend au-delà du bord interne, en regard dudit bord externe. De la sorte, l'habillage intérieur qui se prolonge avec son rebord libre à l'aplomb du bord externe qui lui, longe une bordure de toit, permet de récupérer et canaliser l'eau provenant de la surface externe qui s'écoule le long du bord externe et goutte vers l'intérieur du véhicule.

En outre, le rebord libre de l'habillage intérieur déborde dans le plan définit par la feuillure, ce qui permet de diminuer proportionnellement la largeur des habillages de porte en regard qui eux sont adaptés à parfaire l'étanchéité entre la porte et l'ouverture.

Selon un premier mode de mise en oeuvre, ladite porte présente des contours qui portent au moins un élément d'étanchéité prenant appui directement contre ledit bord externe. De la sorte, il n'est nul besoin de prévoir un dispositif particulier longeant le bord externe et permettant d'assurer la jointure entre la porte et l'ouverture, rôle qui était rempli dans le passé par les moyens rapportés formant gouttière.

Selon une caractéristique particulière, ledit habillage présente une nervure sensiblement parallèle audit rebord libre et qui prend appui contre ledit bord interne. Une telle nervure, outre qu'elle permet de solidariser l'habillage à la paroi interne de la carrosserie, assure aussi l'étanchéité de l'espace entre cette paroi interne et l'habillage vis-à-vis de l'extérieur.

Cette nervure et ledit rebord libre sont formés d'une seule pièce avec ledit habillage intérieur de façon à réaliser l'ensemble à un coût avantageux. Ainsi, en moulant d'une seule pièce l'habillage avec un moule adapté, on fait l'économie des moyens formant gouttières selon l'art antérieur, de leur montage et d'une partie des habillages de porte, le tout déduit du surplus de matière pour réaliser le rebord libre. Le coût de la matière étant négligeable par rapport aux autres coûts.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels:
- la Figure 1 est une vue schématique partielle en coupe transversale d'un bord latéral supérieur de véhicule automobile montrant la présente invention ; et,
- la Figure 2 est une vue schématique partielle présentant les éléments illustrés sur la Figure 1, complétés par le bord supérieur d'une porte fermée.

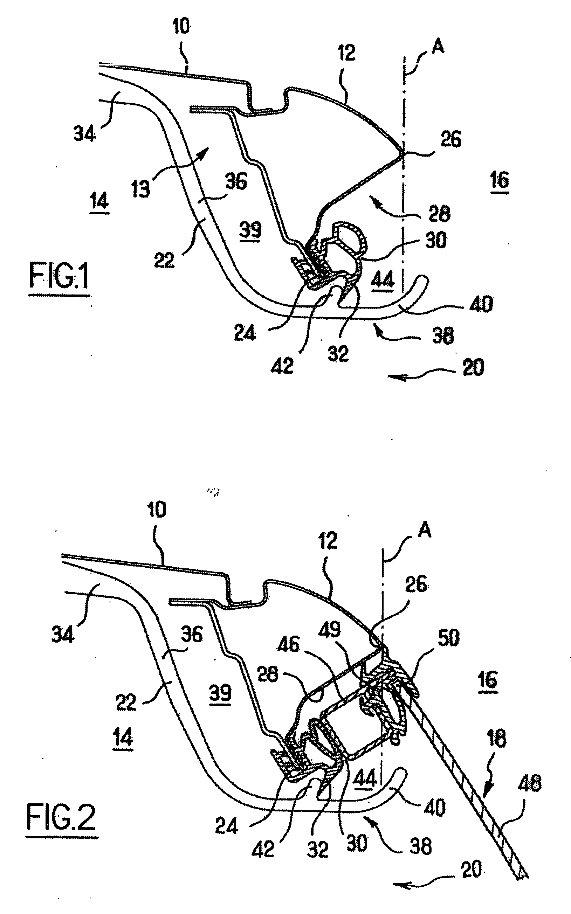

Sur la Figure 1 on a représenté en coupe transversale par rapport à un axe longitudinal d'un véhicule automobile, des éléments de sa carrosserie et en particulier, un pavillon 10 qui se prolonge latéralement par un côté de caisse 12 et qui constituent ensemble en partie sa surface externe. Le côté de caisse 12 borde ainsi le toit du véhicule. Par ailleurs, la carrosserie présente une paroi interne 13.

Le véhicule automobile présente un habitacle 14 qui est isolé de l'extérieur 16 par une porte 18 que l'on trouve uniquement sur la Figure 2 et qui est adaptée à obturer une ouverture 20. L'habitacle est délimité également par la paroi interne 13, laquelle est recouverte d'un habillage intérieur 22 qui s'étend latéralement en bordant notamment les ouvertures.

L'ouverture 20 ménagée dans la carrosserie du véhicule définit un bord interne 24 et un bord externe 26. Le bord interne 24 borde la paroi interne 13 et le bord externe lui, horde le côté de caisse 12. L'espace entre les deux bords, externe 26 et interne 24 correspond à une feuillure 28 de la porte.

Le bord interne 24 forme une arête en saillie orientée à l'opposé du pavillon 10 et inclinée vers l'extérieur 16, adaptée à recevoir un joint de porte 30. Ce joint de porte est formé d'un profilé en élastomère présentant deux bourrelets compressibles et une partie en U adapté à chevaucher ledit bord interne 24 pour y être solidarisé. De la sorte, le joint de porte 30 est maintenu sur le bord interne, les bourrelets orientés vers l'extérieur à partir du bord interne 24.

En outre, le joint de porte 30 présente une aile 32 qui s'étend à partir d'un des bourrelets qui jouxte la partie en U, vers l'intérieur dans un sens opposé audit bourrelet et dont la fonction sera décrite ci-après en combinaison avec l'habillage intérieur 22.

Cet habillage intérieur 22 dont seulement une partie latérale est ici représentée et qui fait précisément l'objet de l'invention, présente une première portion 34 sensiblement en appui contre ta paroi interne 13 correspondant au pavillon 10, une deuxième portion 36, inclinée par rapport à la première portion 34 et qui s'étend toujours, en regard de la paroi interne 13 mais ici, qui correspond au côté de caisse 12, et enfin une troisième portion 38 qui elle s'étend vers l'extérieur 16 sensiblement parallèlement à la première portion 34 et surtout au-delà du bord interne 24 qu'elle joint. Contrairement à ta première portion 34, la deuxième portion 36 s'étend à distance de la paroi interne 13 de façon à ménager un espace libre 39 formant une zone technique apte, par exemple au passage de câbles de commande ou d'alimentation, ou même à recevoir un coussin gonflable du type « airbag » qui se déploie le long de la partie latérale intérieure en cas d'accident. En revanche, on détaillera précisément la troisième portion 38 qui constitue une caractéristique de l'invention.

Alors que les habillages intérieurs présentaient dans le passé, seulement une troisième portion qui se terminait par un bord adapté à joindre le bord interne de l'ouverture, l'habillage intérieur 22 selon l'invention est prolongé par un rebord libre 40 qui s'étend à partir dudit bord interne 24, vers l'extérieur en regard dudit bord externe 26.

En outre, l'habillage intérieur 22 et plus précisément sa troisième portion 38, présente une nervure 42 en saillie vers le joint de porte 30 et qui vient s'appliquer contre son aile 32 en fermant de façon relativement étanche l'espace libre 39. C'est par conséquent le joint de porte 30 qui permet de relier et de joindre de façon étanche l'habillage intérieur 22 et le bord interne 24.

Le rebord libre 40, ici représenté horizontalement, tel qu'il l'est sur le véhicule automobile normalement en appui sur le sol, est recourbé vers le bord externe 26 de façon à former, longitudinalement une gouttière 44 imperméable à l'eau, avec la nervure 42, gouttière 44 qui s'étend à l'aplomb de ce bord externe 26 selon un axe vertical A. Ainsi, l'eau qui pourrait s'écouler à la surface du côté de caisse 12 pour goutter ensuite au droit du bord externe 26 est susceptible d'être recueillie et canalisée dans la gouttière 44.

Bien entendu, la matière utilisée pour réaliser l'habillage intérieur 22 et en particulier cette troisième portion 38 doit être imperméable à l'eau. Selon un mode de réalisation de l'invention elle est moulée en matière plastique, d'une seule pièce avec l'ensemble de l'habillage intérieur 22.

On se référera à la Figure 2 sur laquelle, en plus des éléments illustrés sur la Figure 1, on a représenté la porte 18 qui vient refermer de manière relativement étanche l'ouverture 20.

On retrouve sur cette Figure 2, outre les autres éléments, le rebord libre 40 de 'l'habillage intérieur 22 toujours à l'aplomb du bord externe 26, malgré la présence de la porte 18 qui est en position de fermeture mais qui ne s'appuie pas contre le rebord libre 40 ni ne le déforme.

Cette porte 18 présente un cadre 46 qui se loge dans le plan de la feuillure de la porte, et une vitre latérale 48 qui prolonge de façon sensiblement continue le côté de caisse 12 selon son profit courbe. Par ailleurs, une coulisse 49 de porte, constituée d'un profilé en matière plastique, par exemple en élastomère et de forme complexe est montée sur le cadre 46. Cette coulisse 49 de porte est montée sur la paroi externe du cadre 46 et elle permet non seulement de recevoir un bord supérieur 50 de la vitre 48 pour rendre étanche la jointure, vitre 48 et cadre 46 mais encore, elle permet de rendre étanche la jointure entre le bord supérieur 50 de la vitre 48 et le bord externe 26-de l'ouverture 20.

De la sorte, lorsque la porte 18 est en position de fermeture, la surface qui s'étend du côté de la caisse 12 jusqu'à la vitre latérale 18 est continue et définit une courbe régulière de sorte que l'eau qui s'écoule contre cette surface ne pénètre pas dans l'ouverture 20 et s'écoule latéralement contre la vitre 48.

De surcroît, la coopération de la vitre 48, de la coulisse 49 et du bord externe 26 qui est prolongé par le côté de caisse 12 pour former une surface régulière, permet également un écoulement d'air adapté à diminuer la résistance aux frottements.

De plus, peur réaliser une double étanchéité, le cadre 46 vient s'appuyer et comprimer le joint de porte 30.

Tel que représenté sur les Figures 1 et 2, le rebord libre 40 prolonge l'habillage intérieur 22 dans la partie supérieure de l'ouverture. Toutefois, selon un mode de réalisation particulier, le rebord libre 40 se prolonge avec l'habillage intérieur également longitudinalement dans les bords latéraux de l'ouverture 20 de manière à se substituer aux habillages de porte et particulièrement à leurs extensions qui permettent de réaliser l'étanchéité de la porte vis-à-vis de l'ouverture. Ainsi, il n'est nul besoin de prévoir des habillages spéciaux sur les portes.

Le rebord libre 40 tel que représenté sur la Figure 2, peut améliorer le guidage de l'air d'une ventilation, en particulier pour le désenbuage des vitres latérales. L'air peut venir des montants du système de ventilation par l'intermédiaire des montants de pare-brise ou leur habillage.

## Revendications

1. Véhicule automobile comportant une carrosserie qui présente une paroi interne (13), une surface externe et au moins une ouverture susceptible d'être fermée par une porte (18), ladite ouverture définissant un bord interne (24) qui rejoint ladite paroi interne (13) et un bord externe (26) qui rejoint ladite surface externe, ladite paroi interne (13) étant recouverte d'un habillage intérieur (22) qui joint ledit bord interne (24),
**caractérisé en ce que** ledit habillage intérieur (22) est prolongé par un rebord libre (40) qui s'étend à partir dudit bord interne (24), vers l'extérieur en regard dudit bord externe (26).

2. Véhicule automobile selon la revendication 1, **caractérisé en ce que**, ledit véhicule présentant un toit, ledit bord externe (26) longe une bordure dudit toit, et **en ce que** ledit rebord libre (40) s'étend en gouttière (44) à l'aplomb dudit bord externe (26).

3. Véhicule automobile selon la revendication 1 ou 2, **caractérisé en ce que** ladite porte (18) présente des contours (49) qui portent au moins un élément d'étanchéité prenant appui directement contre ledit bord externe (26).

4. Véhicule automobile selon l'une quelconque des revendications 1 à 3, **caractérisé en ce que** ledit habillage interne (22) présente une nervure (42) sensiblement parallèle audit rebord libre (40) et qui prend appui contre ledit bord interne (24).

5. Véhicule automobile selon la revendication 4, **caractérisé en ce que** ladite nervure (42) et ledit rebord libre (40) sont formés d'une seule' pièce avec ledit habillage intérieur (22).

6. Véhicule automobile selon l'une quelconque des revendications 1 à 5, **caractérisé en ce que** ledit bord interne (24) est muni d'un joint de porte (30).

7. Véhicule automobile selon la revendication 4, **caractérisé en ce que** ledit rebord libre (40) qui s'étend en gouttière (44) est imperméable à l'eau.

## Claims

1. Motor vehicle comprising a bodywork which has an internal wall (13), an external surface and at least one opening which can be closed by a door (18), the said opening defining an internal edge (24) which joins the said internal wall (13) and an external edge (26) which joins the said external surface, the said internal wall (13) being lined with an inner trim (22) which joins the said internal edge (24), **characterized in that** the said inner trim (22) is prolonged by a free rim (40) which extends outwardly from the said internal edge (24) so as to be facing the said external edge (26).

2. Motor vehicle according to Claim 1, **characterized in that**, since the said vehicle has a roof, the said external edge (26) runs along a border of the said roof, and **in that** the said free rim (40) extends in the form of a gutter (44) in vertical alignment with the said external edge (26).

3. Motor vehicle according to Claim 1 or 2, **characterized in that** the said door (18) has contours (49) which bear at least one sealing element bearing directly against the said external edge (26).

4. Motor vehicle according to any one of Claims 1 to 3, **characterized in that** the said internal trim (22) has a rib (42) which is substantially parallel to the said free rim (40) and which bears against the said internal edge (24).

5. Motor vehicle according to Claim 4, **characterized in that** the said rib (42) and the said free rim (40) are formed in a single piece with the said inner trim (22).

6. Motor vehicle according to any one of Claims 1 to 5, **characterized in that** the said internal edge (24) is provided with a door seal (30).

7. Motor vehicle according to Claim 4, **characterized in that** the said free rim (40) which extends in the form of a gutter (44) is impermeable to water.

## Patentansprüche

1. Kraftfahrzeug mit einer Karosserie, die eine Innenwand (13), eine Außenfläche und mindestens eine Öffnung aufweist, die von einer Tür (18) verschlossen werden kann, wobei die Öffnung einen Innenrand (24), der an die Innenwand (13) anschließt, und einen Außenrand (26) aufweist, der an die Außenfläche anschließt, wobei die Innenwand (13) mit einer Innenverkleidung (22) bedeckt ist, die an den Innenrand (24) anschließt, **dadurch gekennzeichnet, dass** die Innenverkleidung (22) von einer freien Randleiste (40) verlängert wird, die sich ausgehend vom Innenrand (24) nach außen gegenüber dem Außenrand (26) erstreckt.

2. Kraftfahrzeug nach Anspruch 1, **dadurch gekennzeichnet, dass** das Fahrzeug ein Dach aufweist, dass der Außenrand (26) entlang einer Leiste des Dachs verläuft, und dass die freie Randleiste (40) sich rinnenförmig (44) lotrecht zum Außenrand (26) erstreckt.

3. Kraftfahrzeug nach Anspruch 1 oder 2, **dadurch gekennzeichnet, dass** die Tür (18) Umrisse (49) aufweist, die mindestens ein Dichtelement tragen, das direkt gegen den Außenrand (26) anliegt.

4. Kraftfahrzeug nach einem der Ansprüche 1 bis 3, **dadurch gekennzeichnet, dass** die Innenverkleidung (22) eine Rippe (42) im Wesentlichen parallel zur freien Randleiste (40) aufweist, die gegen den Innenrand (24) anliegt.

5. Kraftfahrzeug nach Anspruch 4, **dadurch gekennzeichnet, dass** die Rippe (42) und die freie Randleiste (40) aus einem Stück mit der Innenverkleidung (22) geformt werden.

6. Kraftfahrzeug nach einem der Ansprüche 1 bis 5, **dadurch gekennzeichnet, dass** der Innenrand (24) mit einer Türdichtung (30) versehen ist.

7. Kraftfahrzeug nach Anspruch 4, **dadurch gekennzeichnet, dass** die freie Randleiste (40), die sich rinnenförmig (44) erstreckt, wasserundurchlässig ist.
